# EUROPEAN PATENT APPLICATION

(11) **EP 2 426 886 A1**
(43) Date of publication of application: **07.03.2012**
(21) Application number: 10758040.9
(22) Date of filing: 30.03.2010
(51) Int. Cl.: H04L 29/06

(54) **METHOD, APPARATUS AND SYSTEM FOR PROCESSING STREAMING MEDIA SERVICE**

(30) Priority: 30.03.2009 CN 200910081208
(71) Applicant: Huawei Technologies Co., Ltd., Longgang District, Shenzhen Guangdong 518129 (CN)
(72) Inventor: GE, Zhengkai, Shenzhen Guangdong 518129 (CN)
(74) Representative: Barth, Stephan Manuel
(86) International application number: PCT/CN2010/071402
(87) International publication number: WO 2010/111938

(57) **Abstract**

A method, an apparatus, and a system for processing a streaming media service are provided. The method includes: adding a user identifier required for authentication to a Real Time Streaming Protocol (RTSP) request message; and sending the RTSP request message including the user identifier required for authentication to an RTSP server, so that the RTSP server performs user authentication according to the user identifier required for authentication. The apparatus includes: a processing module and a sending module. The system includes: an RTSP server and an RTSP proxy. In embodiments of the present invention, a user identifier required for authentication is directly carried when an RTSP request is sent, so that no extra server needs to be added to acquire the user identifier, thus simplifying the process of acquiring the user identifier in the streaming media service, saving the service cost, and at the same time expanding the service application scope.

## Description

This application claims priority to Chinese Patent Application No. 200910081208.X, filed with the Chinese Patent Office on March 30, 2009 and entitled "METHOD, APPARATUS, AND SYSTEM FOR PROCESSING STREAMING MEDIA SERVICE", which is incorporated herein by reference in its entirety.

### FIELD OF THE INVENTION

The embodiments of the present invention relate to the field of communications, and in particular, to a method, an apparatus, and a system for processing a streaming media service.

### BACKGROUND OF THE INVENTION

With the rapid development of data services, users of streaming media services become more and more. The Real Time Streaming Protocol (hereinafter referred to as RTSP) is a common streaming media control protocol, where control and management of a streaming media service are implemented mainly through RTSP interaction between an RTSP client and an RTSP server, the RTSP client sends an RTSP request message, and the RTSP server processes the RTSP request message and returns a response to the RTSP client. An optional module, namely, an RTSP proxy, may also be included. The optional module is used as an agent between the RTSP client and the RTSP server to perform an RTSP buffering/forwarding function.

During actual streaming media operation, an RTSP server needs to acquire a user identifier of a user to perform user authentication, so as to realize streaming media management and streaming media charging for the user. The Remote Authentication Dial In User Service (hereinafter referred to as Radius) protocol may carry a user identifier, so that in an existing streaming media service, a Radius proxy server is usually adopted to provide a user identifier for an RTSP server.

When a Radius proxy server is adopted, firstly, a connection between an RTSP client and the Radius proxy server is established, and authentication is performed, and then a Radius request message carrying a user identifier and a user IP address is sent to an RTSP server through the Radius proxy server. After the RTSP server responds to the Radius request information, a connection between the RTSP client and the RTSP server is established, and data communication and corresponding streaming media management and charging are performed.

Or, a user information management server is adopted, and an RTSP client directly sends an RTSP request message to an RTSP server. After receiving the RTSP request message, the RTSP server queries the user information management server for a corresponding user identifier according to the user IP address, and performs data communication and corresponding streaming media management and charging with the RTSP client.

During the implementation of the present invention, the inventor finds that the prior art at least has the following problems. No matter whether a Radius proxy server or a user information management server is adopted, an extra server needs to be added to acquire a user identifier, thus increasing the service cost. In addition, in the case that a network does not support the Radius protocol or in a scenario where no user information management server is set up, user authentication cannot be performed, resulting in a limitation.

### SUMMARY OF THE INVENTION

Embodiments of the present invention provide a method, an apparatus, and a system for processing a streaming media service, so as to simplify the process of acquiring a user identifier in the streaming media service, save the service cost, and expand the service application scope.

A method for processing a streaming media service provided in an embodiment of the present invention includes:
adding a user identifier required for authentication to a Real Time Streaming Protocol (RTSP) request message; and
sending the RTSP request message including the user identifier required for authentication to an RTSP server, so that the RTSP server performs user authentication according to the user identifier required for authentication.
A method for processing a streaming media service further provided in an embodiment of the present invention includes:
receiving a Real Time Streaming Protocol (RTSP) request message including a user identifier required for authentication;
parsing the user identifier required for authentication from the RTSP request message; and
performing user authentication according to the user identifier required for authentication.

An apparatus for processing a streaming media service provided in an embodiment of the present invention includes:
a processing module, configured to add a user identifier required for authentication to a Real Time Streaming Protocol (RTSP) request message; and
a sending module, configured to send the RTSP request message including the user identifier required for authentication to an RTSP server, so that the RTSP server performs user authentication according to the user identifier required for authentication.

An apparatus for processing a streaming media service further provided in an embodiment of the present invention includes:
a second receiving module, configured to receive a Real Time Streaming Protocol (RTSP) request message including a user identifier required for authentication;
a parsing module, configured to parse the user identifier required for authentication from the RTSP request message received by the second receiving module; and
an authentication module, configured to perform user authentication according to the user identifier required for authentication parsed by the parsing module.
A system for processing a streaming media service provided in an embodiment of the present invention includes:
a Real Time Streaming Protocol (RTSP) server, configured to receive an RTSP request message including a user identifier required for authentication, parse the user identifier required for authentication from the RTSP request message, and perform user authentication according to the user identifier required for authentication; and
an RTSP proxy, configured to receive an RTSP request message sent by an RTSP client, acquire a user identifier required for authentication according to the RTSP request message, add the user identifier required for authentication to the RTSP request message, and send an RTSP request message including the user identifier required for authentication to the RTSP server, so that the RTSP server performs authentication according to the user identifier required for authentication.

In the embodiments of the present invention, a method, an apparatus, and a system for processing a streaming media service are provided, where a user identifier required for authentication is directly carried when an RTSP request message is sent, so that no extra server needs to be added to acquire the user identifier, thus simplifying the process of acquiring the user identifier in the streaming media service, saving the service cost, and at the same time expanding the service application scope.

### BRIEF DESCRIPTION OF THE DRAWINGS

FIG. 1 is a flow chart of a method for processing a streaming media service according to an embodiment of the present invention;
FIG. 2 is a flow chart of a method for processing a streaming media service according to another embodiment of the present invention;
FIG. 3 is a flow chart of a method for processing a streaming media service according to another embodiment of the present invention;
FIG. 4 is a flow chart of a method for processing a streaming media service according to another embodiment of the present invention;
FIG. 5 is a flow chart of a method for processing a streaming media service according to a specific embodiment of the present invention;
FIG. 6 is a flow chart of a method for processing a streaming media service according to another specific embodiment of the present invention;
FIG. 7 is a flow chart of a method for processing a streaming media service according to another specific embodiment of the present invention;
FIG. 8 is a schematic structural diagram of an apparatus for processing a streaming media service according to an embodiment of the present invention;
FIG. 9 is a schematic structural diagram of an apparatus for processing a streaming media service according to another embodiment of the present invention;
FIG. 10 is a schematic structural diagram of an apparatus for processing a streaming media service according to another embodiment of the present invention;
FIG. 11 is a schematic structural diagram of an apparatus for processing a streaming media service according to another embodiment of the present invention; and
FIG. 12 is a system block diagram of a system for processing a streaming media service according to an embodiment of the present invention.

### DETAILED DESCRIPTION OF THE EMBODIMENTS

The technical solutions according to embodiments of the present invention are further described in detail in the following through the accompanying drawings and the embodiments.

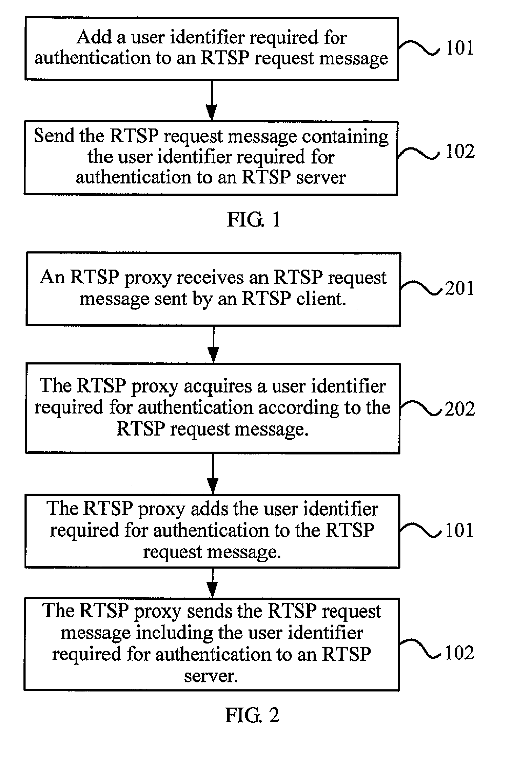

FIG. 1 is a flow chart of a method for processing a streaming media service according to an embodiment of the present invention. As shown in FIG. 1, a method for processing a streaming media service provided in the embodiment of the present invention includes:
Step 101: Add a user identifier required for authentication to an RTSP request message.
Step 102: Send the RTSP request message including the user identifier required for authentication to an RTSP server, so that the RTSP server performs user authentication according to the user identifier required for authentication.

In different embodiments, according to different network structures, an RTSP client may add a user identifier required for authentication to an RTSP request message and send the RTSP request message to an RTSP server, or an RTSP proxy may add a user identifier required for authentication to an RTSP request message and send the RTSP request message to an RTSP server.

In the embodiment where an RTSP client adds a user identifier required for authentication, when a user uses a streaming media service, the RTSP client may firstly add a user identifier required for authentication to an RTSP request message, and then send the RTSP request message to an RTSP server. After receiving an RTSP request message including a user identifier required for authentication, the RTSP server parses a type of the user identifier required for authentication from the RTSP request message, and performs user authentication according to the parsed user identifier. In this embodiment of the present invention, the RTSP client may specifically be a terminal such as User Equipment (hereinafter referred to as UE) or a Mobile Station (hereinafter referred to as MS). The request message sent by the RTSP client may be any request message defined in the RTSP, and includes, but is not limited to, DESCRIBE, ANNOUMCE, GET_PARAMETER, OPTIONS, PAUSE, PLAY, RECORD, REDIRECT, SETUP, SET_PARAMETER, and TEARDOWM.

In this embodiment of the present invention, a method for processing a streaming media service is provided, where a user identifier required for authentication is directly carried when an RTSP request message is sent, so that no extra server needs to be added to acquire the user identifier, thus simplifying the process of acquiring the user identifier in the streaming media service, saving the service cost, and at the same time expanding the service application scope.

In an embodiment, if an RTSP proxy exists between an RTSP client and an RTSP server, and step 102 may specifically be: The RTSP client sends an RTSP request message including a user identifier required for authentication to the RTSP server through the RTSP proxy. Under this circumstance, the RTSP proxy performs a forwarding function by forwarding the RTSP request message including the user identifier required for authentication to the RTSP server, so that the RTSP server performs user authentication according to the user identifier required for authentication.

FIG. 2 is a flow chart of a method for processing a streaming media service according to another embodiment of the present invention. This embodiment is an embodiment where an RTSP proxy adds a user identifier required for authentication, and as shown in FIG. 2, before the step 101, the method may further include:
Step 201: An RTSP proxy receives an RTSP request message sent by an RTSP client.
Step 202: The RTSP proxy acquires a user identifier required for authentication according to the RTSP request message.

In this embodiment, when a user uses a streaming media service, the RTSP client firstly sends an RTSP request message to the RTSP proxy. After receiving the RTSP request message sent by the RTSP client, the RTSP proxy acquires a user identifier required for authentication according to the RTSP request message, and then adds the user identifier required for authentication to the RTSP request message, and sends the RTSP request message to an RTSP server. After receiving an RTSP request message including a user identifier required for authentication, the RTSP server parses the user identifier required for authentication from the RTSP request message, and performs user authentication according to the parsed user identifier.

In this embodiment of the present invention, a method for processing a streaming media service is provided, where an RTSP proxy acquires a user identifier required for authentication according to a received RTSP request message, and sends the user identifier required for authentication to an RTSP server, so that no extra server needs to be added to acquire the user identifier, thus simplifying the process of acquiring the user identifier in the streaming media service, saving the service cost, and at the same time expanding the service application scope.

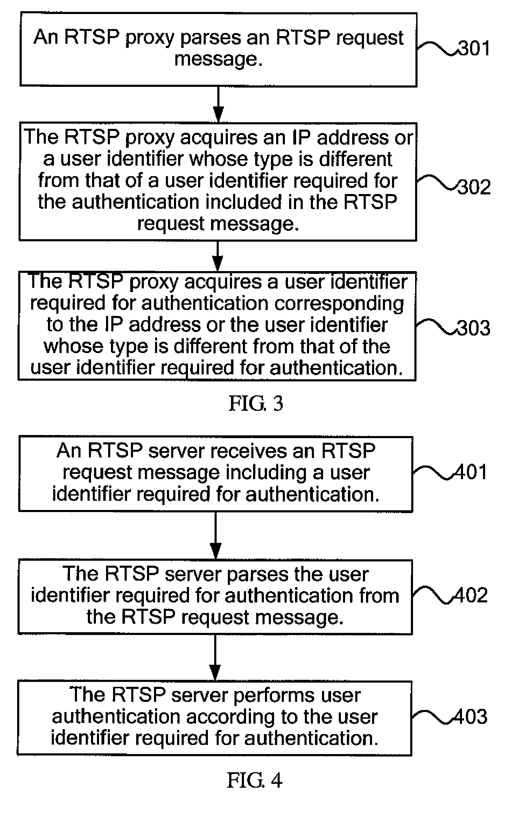

FIG. 3 is a flow chart of a method for processing a streaming media service according to another embodiment of the present invention. As shown in FIG. 3, based on the preceding embodiments, step 202 may specifically be:
Step 301: An RTSP proxy parses an RTSP request message.
Step 302: The RTSP proxy acquires an IP address or a user identifier whose type is different from that of a user identifier required for authentication included in the RTSP request message.
Step 303: The RTSP proxy acquires a user identifier required for authentication corresponding to the IP address or the user identifier whose type is different from that of the user identifier required for authentication.

In this embodiment, an RTSP client may send an RTSP request message including an IP address to the RTSP proxy. After receiving the RTSP request message, the RTSP proxy acquires the IP address, and then acquires a user identifier required for authentication corresponding to the IP address, and adds the user identifier required for authentication to the RTSP request message, and sends the RTSP request message to an RTSP server. After receiving the RTSP request message including the user identifier required for authentication, the RTSP server parses the user identifier required for authentication from the RTSP request message, and performs user authentication according to the parsed user identifier. A user IP address and a user identifier required for authentication corresponds to each other uniquely, and a corresponding relationship of the user IP address and the user identifier required for authentication may be stored in the RTSP proxy or other network elements.

The RTSP client may send an RTSP request message including a user identifier whose type is different from that of a user identifier required for authentication to the RTSP proxy. After receiving the RTSP request message, the RTSP proxy acquires the user identifier with the different type, and then acquires a user identifier required for authentication according to the user identifier with the different type, adds the user identifier for the authentication to the RTSP request message, and sends the user identifier required for authentication to the RTSP server, so that the RTSP server performs user authentication according to the user identifier required for authentication. The user identifier required for authentication of the user and the user identifier with the different type corresponds to each other uniquely, and a corresponding relationship of the user identifier required for authentication of the user and the user identifier with the different type may also be stored in the RTSP proxy or other network elements.

In this embodiment of the present invention, a method for processing a streaming media service is provided, where an RTSP proxy acquires a user identifier required for authentication according to an IP address or a user identifier whose type is different from that of the user identifier required for authentication in a received RTSP request message, and sends the user identifier required for authentication to an RTSP server, so that no extra server needs to be added to acquire the user identifier, thus simplifying the process of acquiring the user identifier in the streaming media service, saving the service cost, and at the same time expanding the service application scope.

In this embodiment of the present invention, the RTSP client and the RTSP proxy may carry a user identifier required for authentication in an extended field by extending a packet field of an RTSP request message. In this embodiment of the present invention, the extending the packet field of the RTSP request message may be implemented by adding a user identifier field in the RTSP request message or by using a reserved field in the RTSP request message as the user identifier field.

In an embodiment where an RTSP proxy exists during networking, the RTSP proxy receives an RTSP request message sent by an RTSP client through a Gateway GPRS Support Node (hereinafter referred to as GGSN) or a Packet Data Serving Node (hereinafter referred to as PDSN).

In addition, in this embodiment of the present invention, the user identifier required for authentication may be a Mobile Station international Integrated Services Digital Network number (hereinafter referred to as MS ISDN), a Mobile Directory Number (hereinafter referred to as MDN), an International Mobile Subscriber Identity (hereinafter referred to as IMSI), an International Mobile Equipment Identity (hereinafter referred to as IMEI), a Mobile subscriber Identification Number (hereinafter referred to as MIN), an E-mail address, or a Session Initiation Protocol-Uniform Resource Identifier (hereinafter referred to as SIP-URI).

FIG. 4 is a flow chart of a method for processing a streaming media service according to another embodiment of the present invention. As shown in FIG. 4, the method includes:
Step 401: An RTSP server receives an RTSP request message including a user identifier required for authentication.
Step 402: The RTSP server parses the user identifier required for authentication from the RTSP request message.
Step 403: The RTSP server performs user authentication according to the user identifier required for authentication.

In this embodiment, when a user uses a streaming media service, an RTSP server receives an RTSP request message including a user identifier required for authentication, parses the user identifier required for authentication from the RTSP request message, and performs user authentication according to the parsed user identifier.

In this embodiment of the present invention, a method for processing a streaming media service is provided, where no extra server needs to be added to acquire a user identifier, thus simplifying the process of acquiring the user identifier in the streaming media service, saving the service cost, and at the same time expanding the service application scope.

In this embodiment of the present invention, the RTSP server may receive an RTSP request message including a user identifier required for authentication directly from an RTSP client or receive the RTSP request message including the user identifier required for authentication from an RTSP proxy, and then perform a subsequent user authentication operation.

The RTSP server may parse an extended user identifier field in an RTSP request message, and read a user identifier required for authentication from the user identifier field.

In addition, in this embodiment of the present invention, the user identifier required for authentication may include an MSISDN, an MDN, an IMSI, an IMEI, an MIN, an E-mail, or an SIP-URI.

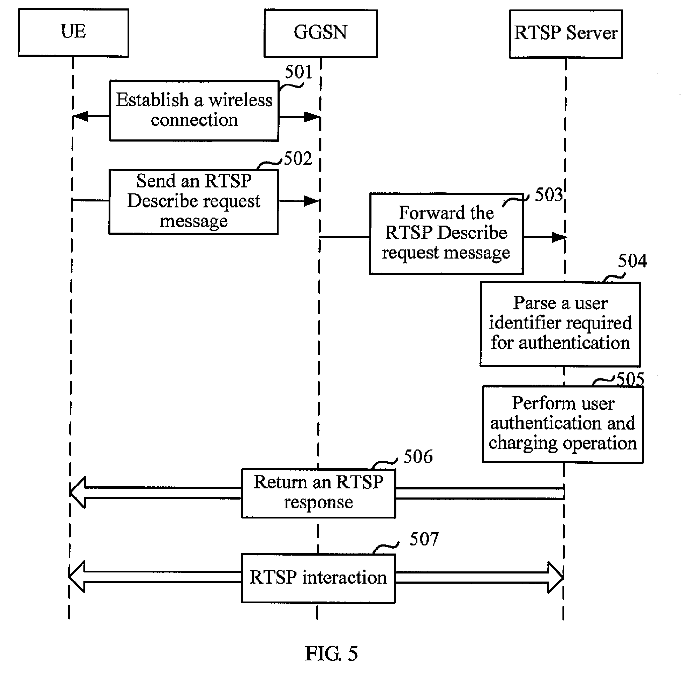

FIG. 5 is a flow chart of a method for processing a streaming media service according to a specific embodiment of the present invention. As shown in FIG. 5, the method includes:
Step 501: A user uses a UE to access a wireless network, and establishes a wireless connection with a GGSN.
Step 502: The UE sends an RTSP Describe request message to the GGSN through the wireless network. The RTSP request message includes a user identifier required for authentication, for example, a user identifier required for authentication is: "IMSI"460011234567890. A packet instance fragment is:
   DESCRIBE rtsp://real.cict.fr:554/presentation/presentation.smi RTSP/1.0
   CSeq: 1
   User-Agent: RealMedia Player (HelixDNAClient)/10.0.0.0 (win32)
   Accept: application/sdp
   Session: 28277-1;timeout=80
   Bandwidth: 1544000
   ClientID: WinNT_5.1_6.0.12.1672_RealPlayer_R31CND_zh-CN_686
   Cookie:
   cbid=dfhjjmgihjifhidmeokonpnqerjrktlufkhjkidlegifhiplnnqoqpnqpresmqmpeffgjhcl
   GUID: 00000000-0000-0000-0000-000000000000
   Language: zh-CN, zh, *
   PlayerCookie: cbid
   UserIdType: IMSI
   UserId: 460011234567890
   RegionData: 0
   Require: com.real.retain-entity-for-setup
   SupportsMaximumASMBandwidth: 1
Step 503: The GGSN forwards the RTSP Describe request message including the user identifier required for authentication which is "IMSI"460011234567890 to an RTSP server.
Step 504: The RTSP server parses the user identifier required for authentication which is "IMSI"460011234567890 from the RTSP Describe request message.
Step 505: The RTSP server performs user authentication and charging operation according to the user identifier which is "IMSI"460011234567890.
Step 506: The RTSP server returns an RTSP response to the UE.
Step 507: RTSP interaction between the RTSP server and the UE is performed.

In this embodiment of the present invention, a method for processing a streaming media service is provided, where a user identifier required for authentication is directly carried when an RTSP client sends an RTSP request message, so that no extra server needs to be added to acquire the user identifier, thus simplifying the process of acquiring the user identifier in the streaming media service, saving the service cost, and at the same time expanding the service application scope.

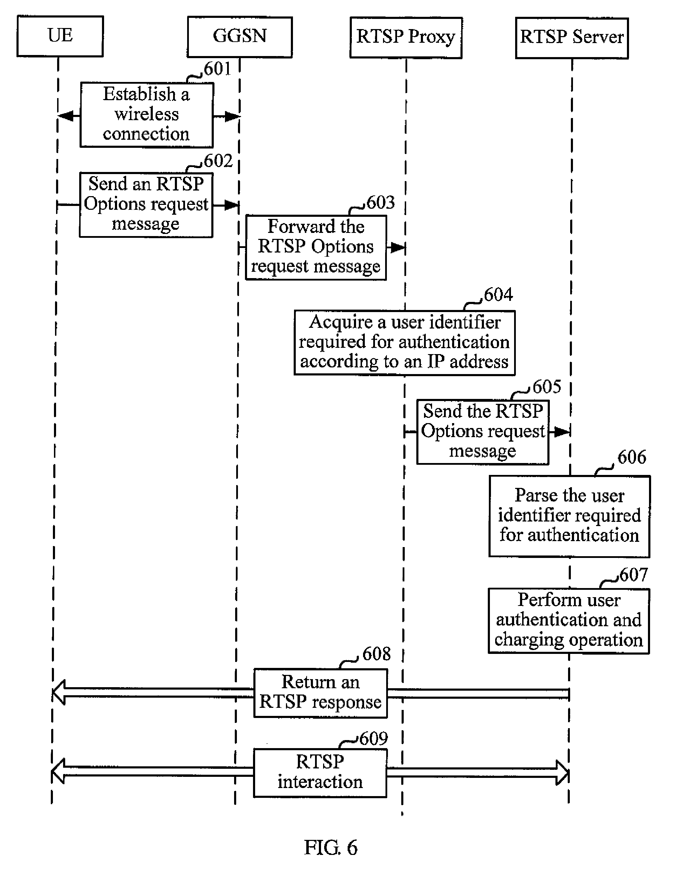

FIG. 6 is a flow chart of a method for processing a streaming media service according to another specific embodiment of the present invention. As shown in FIG. 6, the method includes:
Step 601: A user uses a UE to access a wireless network, and establishes a wireless connection with a GGSN.
Step 602: The UE sends an RTSP Options request message to the GGSN. The RTSP request message includes a user IP address, and the RTSP request message does not carry a user identifier.
Step 603: The GGSN forwards the RTSP Options request message including the user IP address to an RTSP proxy. The RTSP request message does not carry a user identifier.
Step 604: The RTSP proxy acquires a user identifier required for authentication which is "MSISDN"008613912345678 according to the user IP address.
Step 605: The RTSP proxy forwards the RTSP Options request message to an RTSP server. The request message includes the user identifier required for authentication which is "MSISDN"008613912345678. A packet instance fragment is:
   OPTIONS rtsp://real.cict.fr:554 RTSP/1.0
   CSeq: 1
   User-Agent: RealMedia Player (HelixDNAClient)/10.0.0.0 (win32)
   ClientChallenge: affa4728cb6379f64b2ef531d20cc825
   ClientID: WinNT_5.1_6.0.12.1672_RealPlayer_R31CND_zh-CN_686
   CompanyID: jAv5NhPCuKJ3JsWXLwgwNQ==
   GUID: 00000000-0000-0000-0000-000000000000
   PlayerStarttime: [19/09/2007:19:58:10 10:00]
   Pragma: initiate-session
   UserIdType: MSISDN
   UserId: 008613912345678
   RegionData: 0
Step 606: The RTSP server parses the user identifier required for authentication which is "MSISDN"008613912345678 from the RTSP Options request message.
Step 607: The RTSP server performs user authentication and charging operation according to the user identifier which is "MSISDN"008613912345678.
Step 608: The RTSP server returns an RTSP response to the UE.
Step 609: RTSP interaction between the RTSP server and the UE is performed.

In this embodiment of the present invention, a method for processing a streaming media service is provided, where when receiving an RTSP request message, an RTSP proxy acquires a user identifier required for authentication according to a user IP address, and sends the user identifier required for authentication to an RTSP server, so that no extra server needs to be added to acquire the user identifier, thus simplifying the process of acquiring the user identifier in the streaming media service, saving the service cost, and at the same time expanding the service application scope.

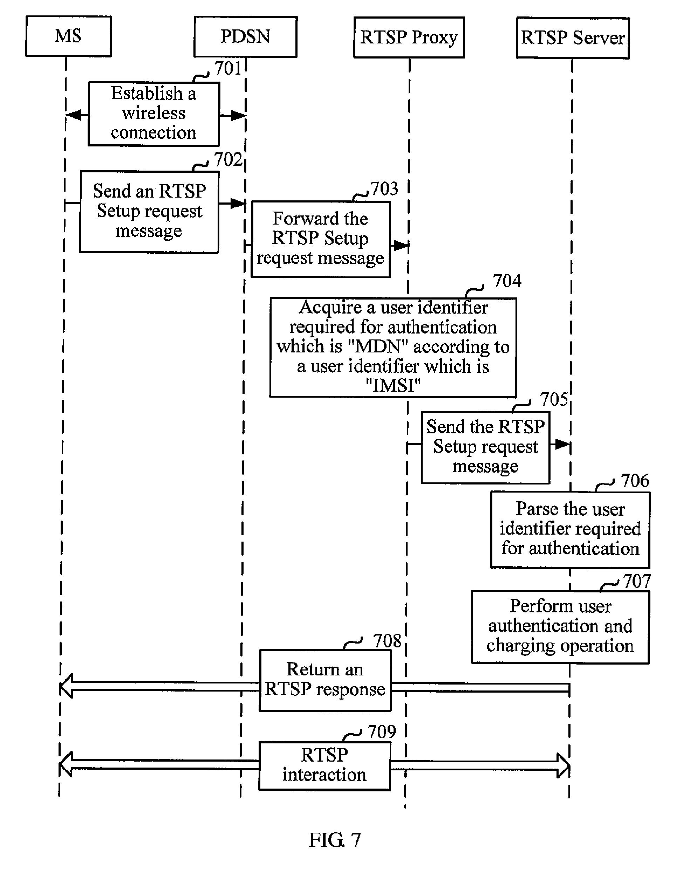

FIG. 7 is a flow chart of a method for processing a streaming media service according to another specific embodiment of the present invention. As shown in FIG. 7, the method includes:
Step 701: A user uses an MS to access a Code Division Multiple Access (hereinafter referred to as CDMA) wireless network, and establishes a wireless connection with a PDSN.
Step 702: The MS sends an RTSP Setup request message to the PDSN through the wireless network. The request message includes a user identifier whose type is different from that of a user identifier required for authentication, for example, "IMSI"460001234567890. A packet instance fragment is:
   SETUP rtsp://real.cict.fr:554/presentation/presentation.smi/streamid=0 RTSP/1.0
   CSeq: 1
   RealChallenge2: c8b82334308b8cb7bc42c25aeebebb7701d0a8e3,
   sd=c238bceb
   RDTFeatureLevel: 2
   Transport:
   x-real-rdt/mcast;clien_port=6970;mode=play,x-real-rdt/udp;clien_port=6970;mode=pla y,x-pn-tngludp;client_port=6970;mode=play,RTP/AVP;unicast;client_port=6970-6971;mode=play,x -pn-tng/tcp;mode=play,x-real-rdt/tcp;mode=play,RTP/AVP/TCP;unicast;mode=play
   User-Agent: RealMedia Player (HelixDNAClient)/10.0.0.0 (win32)
   If-Match: 28277-1
   UserIdType: IMSI
   UserId: 460001234567890
   Cookie:
   cbid=dfhjjmgihjifhidmeokonpnqerjrktlufkhjkidlegifhiplnnqoqpnqpresmqmpeffgjhcl
Step 703: The PDSN forwards the RTSP Setup request message to an RTSP proxy. The RTSP Setup request message includes the user identifier which is "IMSI"460001234567890.
Step 704: The RTSP proxy acquires a user identifier required for authentication which is "MDN"008613012345678 according to the user identifier which is "IMSI"460001234567890.
Step 705: The RTSP proxy forwards the RTSP Setup request message to an RTSP server. The request message includes the user identifier required for authentication which is "MDN"008613012345678. A packet instance fragment is:
   SETUP rtsp://real.cict.fr:554/presentation/presentation.smi/streamid=0 RTSP/1.0
   CSeq: 1
   RealChallenge2: c8b82334308b8cb7bc42c25aeebebb7701doa8e3, sd=c238bceb
   RDTFeatureLevel: 2
   Transport:
   x-real-rdt/mcast;dient_port=6970;mode=play,x-real-rdt/udp;client_port=6970;mode=pla y,x-pn-tng/udp;client_ort=6970;mode=play,RTP/AVP;unicast;client_port=6970-6971;mode=play,x -pn-tng/tcp;mode=play,x-real-rdt/tcp;mode=play,RTP/AVP/TCP;unicast;mode=play
   User-Agent: RealMedia Player (HelixDNAClient)/10.0.0.0 (win32)
   If-Match: 28277-1
   UserIdType: MDN
   UserId: 008613012345678
   Cookie:
   cbid=dfhjjmgihjifhidmeokonpnqerjrktlufkhjkidlegifhiplnnqoqpnqpresmqmpeffgjhcl
Step 706: The RTSP server parses the user identifier required for authentication which is "MDN"008613012345678 from the RTSP Setup request message.
Step 707: The RTSP server performs user authentication and charging operation according to the user identifier which is "MDN"008613012345678.
Step 708: The RTSP server returns an RTSP response to the MS.
Step 709: RTSP interaction between the RTSP server and the MS is performed.

In this embodiment of the present invention, a method for processing a streaming media service is provided, where an RTSP proxy acquires a user identifier required for authentication according to a user identifier whose type is different from that of the user identifier required for authentication provided by an RTSP client, and sends the user identifier required for authentication to an RTSP server, so that no extra server needs to be added to acquire the user identifier, thus simplifying the process of acquiring the user identifier in the streaming media service, saving the service cost, and at the same time expanding the service application scope.

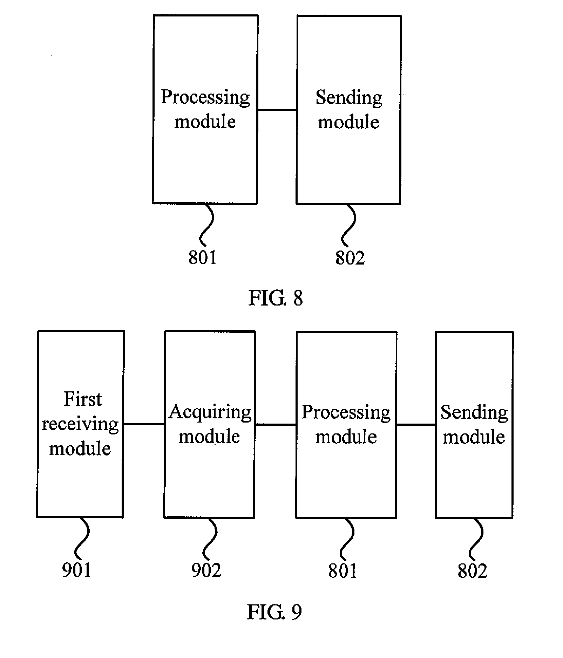

FIG. 8 is a schematic structural diagram of an apparatus for processing a streaming media service according to an embodiment of the present invention. As shown in FIG. 8, the apparatus for processing a streaming media service may include: a processing module 801 and a sending module 802. The processing module 801 is configured to add a user identifier required for authentication to an RTSP request message. The sending module 802 is configured to send the RTSP request message including the user identifier required for authentication to an RTSP server, so that the RTSP server performs user authentication according to the user identifier required for authentication.

When a user uses a streaming media service, the processing module 801 firstly adds a user identifier required for authentication to an RTSP request message, and then the sending module 802 sends the RTSP request message to an RTSP server. After receiving the RTSP request message including the user identifier required for authentication, the RTSP server parses a type of the user identifier required for authentication from the RTSP request message, and performs user authentication according to the parsed user identifier.

The method embodiments may be referred to for implementation of the apparatus for processing a streaming media service shown in FIG. 8 in specific embodiments, which is not repeated here.

In this embodiment of the present invention, an apparatus for processing a streaming media service is provided, where no extra server needs to be added to acquire a user identifier, thus simplifying the process of acquiring the user identifier in the streaming media service, saving the service cost, and at the same time expanding the service application scope.

FIG. 9 is a schematic structural diagram of an apparatus for processing a streaming media service according to another embodiment of the present invention. The apparatus for processing a streaming media service may be an RTSP proxy. As shown in FIG. 9, based on the preceding apparatus embodiment, the apparatus may further include: a first receiving module 901 and an acquiring module 902. The first receiving module 901 is configured to receive an RTSP request message sent by an RTSP client. The acquiring module 902 is configured to acquire a user identifier required for authentication according to the RTSP request message received by the first receiving module 901.

In this embodiment, when a user uses a streaming media service, the first receiving module 901 receives an RTSP request message sent by an RTSP client. The acquiring module 902 acquires a user identifier required for authentication according to the RTSP request message received by the first receiving module 901. Then, the processing module 801 adds the user identifier required for authentication acquired by the acquiring module 902 to the RTSP request message. The sending module 802 sends the RTSP request message to an RTSP server. After receiving the RTSP request message including the user identifier required for authentication, the RTSP server parses the user identifier required for authentication from the RTSP request message, and performs user authentication according to the parsed user identifier.

In this embodiment of the present invention, an apparatus for processing a streaming media service is provided, where a user identifier required for authentication is acquired according to a received RTSP request message, and the user identifier required for authentication is sent to the RTSP server, so that no extra server needs to be added to acquire the user identifier, thus simplifying the process of acquiring the user identifier in the streaming media service, saving the service cost, and at the same time expanding the service application scope.

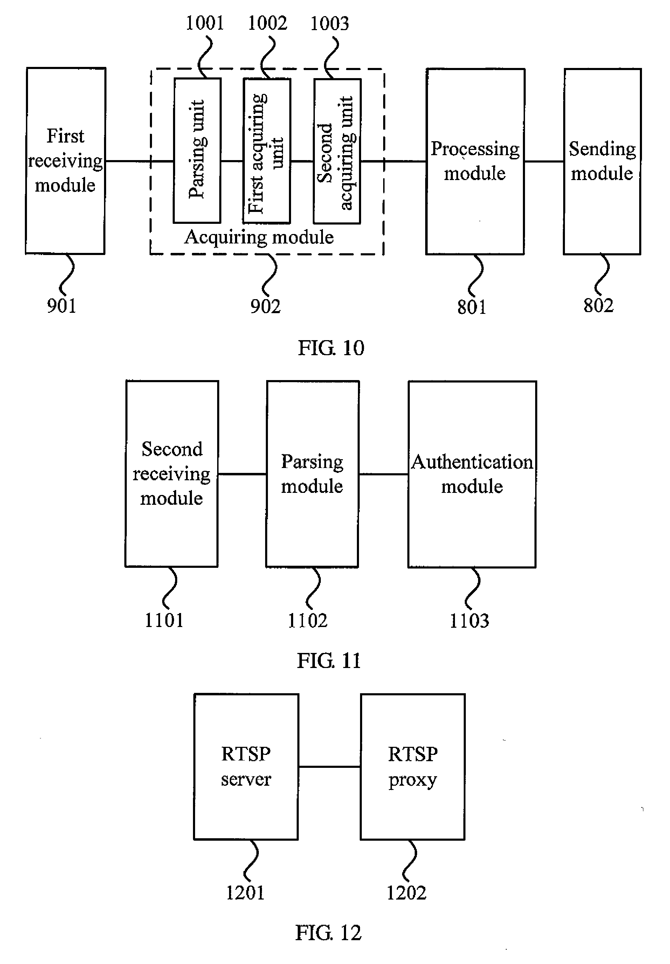

FIG. 10 is a schematic structural diagram of an apparatus for processing a streaming media service according to another embodiment of the present invention. As shown in FIG. 10, based on the preceding embodiments, the acquiring module 902 may include: a parsing unit 1001, a first acquiring unit 1002, and a second acquiring unit 1003. The parsing unit 1001 is configured to parse an RTSP request message received by the first receiving module 901. The first acquiring unit 1002 is configured to acquire an IP address or a user identifier whose type is different from that of a user identifier required for authentication included in the RTSP request message. The second acquiring unit 1003 is configured to acquire a user identifier required for authentication corresponding to the IP address or the user identifier whose type is different from that of the user identifier required for authentication.

In this embodiment, after the first receiving module 901 receives an RTSP request message, the parsing unit 1001 parses the RTSP request message received by the first receiving module 901, the first acquiring unit 1002 acquires an IP address or a user identifier whose type is different from that of a user identifier required for authentication included in the RTSP request message, then the second acquiring unit 1003 acquires a user identifier required for authentication corresponding to the IP address or the user identifier whose type is different from that of the user identifier required for authentication, and then the processing module 801 adds the user identifier required for authentication to the RTSP request message, and the sending module 802 sends the RTSP request message to an RTSP server. After receiving the RTSP request message including the user identifier required for authentication, the RTSP server parses the user identifier required for authentication from the RTSP request message, and performs user authentication according to the parsed user identifier. The user IP address and the user identifier required for authentication corresponds to each other uniquely, and a corresponding relationship of the user IP address and the user identifier required for authentication may be stored in an RTSP proxy or other network elements. The user identifier required for authentication of the user and the user identifier with the different type also corresponds to each other uniquely, and a corresponding relationship of the user identifier required for authentication of the user and the user identifier with the different type may be stored in the RTSP proxy or other network elements.

In this embodiment of the present invention, an apparatus for processing a streaming media service is provided, where a user identifier required for authentication is acquired according to an IP address or a user identifier whose type is different from that of the user identifier required for authentication in a received RTSP request message, and the user identifier required for authentication is sent to the RTSP server, so that no extra server needs to be added to acquire the user identifier, thus simplifying the process of acquiring the user identifier in the streaming media service, saving the service cost, and at the same time expanding the service application scope.

FIG. 11 is a schematic structural diagram of an apparatus for processing a streaming media service according to another embodiment of the present invention. As shown in FIG. 11, the apparatus for processing a streaming media service further provided in the embodiment of the present invention includes a second receiving module 1101, a parsing module 1102, and an authentication module 1103. The second receiving module 1101 is configured to receive an RTSP request message including a user identifier required for authentication. The parsing module 1102 is configured to parse the user identifier required for authentication from the RTSP request message received by the second receiving module 1101. The authentication module 1103 is configured to perform user authentication according to the user identifier required for authentication parsed by the parsing module 1102.

In this embodiment, when a user uses a streaming media service, the second receiving module 1101 receives an RTSP request message including a user identifier required for authentication. The parsing module 1102 parses the user identifier required for authentication from the RTSP request message received by the second receiving module 1101. Then, the authentication module 1103 performs user authentication according to the user identifier parsed by the parsing module 1102.

The method embodiments may be referred to for implementation of the apparatus for processing a streaming media service shown in FIG. 11 in specific embodiments, which is not repeated here.

In this embodiment of the present invention, an apparatus for processing a streaming media service is provided, where no extra server needs to be added to acquire the user identifier, thus simplifying the process of acquiring the user identifier in the streaming media service, saving the service cost, and at the same time expanding the service application scope.

FIG. 12 is a system block diagram of a system for processing a streaming media service according to an embodiment of the present invention. As shown in FIG. 12, the system for processing a streaming media service provided in the embodiment of the present invention includes an RTSP server 1201 and an RTSP proxy 1202. The RTSP server 1201 is configured to receive an RTSP request message including a user identifier required for authentication, parse the user identifier required for authentication from the RTSP request message, and perform user authentication according to the user identifier required for authentication. The RTSP proxy 1202 is configured to receive an RTSP request message sent by an RTSP client, acquire a user identifier required for authentication according to the RTSP request message, add the user identifier required for authentication to the RTSP request message, and send the RTSP request message including the user identifier required for authentication to the RTSP server 1201, so that the RTSP server 1201 performs authentication according to the user identifier required for authentication.

In this embodiment, when a user uses a streaming media service, an RTSP client firstly sends an RTSP request message to the RTSP proxy 1202. After receiving the RTSP request message sent by the RTSP client, the RTSP proxy 1202 acquires a user identifier required for authentication according to the RTSP request message, and then adds the user identifier required for authentication to the RTSP request message, and sends the RTSP request message to the RTSP server 1201. After receiving the RTSP request message including the user identifier required for authentication, the RTSP server 1201 parses the user identifier required for authentication from the RTSP request message, and performs user authentication according to the parsed user identifier.

In this embodiment of the present invention, a system for processing a streaming media service is provided, where an RTSP proxy acquires a user identifier required for authentication according to a received RTSP request message, and sends the user identifier required for authentication to an RTSP server, so that no extra server needs to be added to acquire the user identifier, thus simplifying the process of acquiring the user identifier in the streaming media service, saving the service cost, and at the same time expanding the service application scope.

Through the preceding description of the embodiments, persons skilled in the art may clearly understand that the present invention may be accomplished through software plus a necessary hardware platform, or through only hardware, but in many cases, the former is preferred. Based on this understanding, all or a part of the technical solutions of the present invention that make contributions to the background technologies may be embodied in the form of a software product. The computer software product may be stored in a storage medium such as a ROM/RAM, a magnetic disk, or an optical disk, and include several instructions to instruct computer equipment (may be a personal computer, a server, or network equipment) to perform the method described in each embodiment of the present invention or in some parts of the embodiments.

Finally, it should be noted that the preceding embodiments are merely used for describing the technical solutions of the present invention, but not intended to limit the present invention. It should be understood by persons of ordinary skill in the art that although the present invention has been described in detail with reference to the exemplary embodiments, modifications and equivalent replacements may still be made to the technical solutions of the present invention, and such modifications or equivalent replacements cannot cause the modified technical solutions to depart from the spirit and scope of the technical solutions of the present invention.

## Claims

1. A method for processing a streaming media service, comprising:
adding a user identifier required for authentication to a Real Time Streaming Protocol (RTSP) request message; and
sending the RTSP request message comprising the user identifier required for authentication to an RTSP server, so that the RTSP server performs user authentication according to the user identifier required for authentication.

2. The method for processing a streaming media service according to claim 1, wherein the sending the RTSP request message comprising the user identifier required for authentication to the RTSP server specifically comprises:
sending, by an RTSP client, the RTSP request message comprising the user identifier required for authentication to the RTSP server through an RTSP proxy.

3. The method for processing a streaming media service according to claim 1, wherein before the adding the user identifier required for authentication to the RTSP request message, the method further comprises:
receiving an RTSP request message sent by an RTSP client; and
acquiring a user identifier required for authentication according to the RTSP request message.

4. The method for processing a streaming media service according to claim 3, wherein the acquiring the user identifier required for authentication according to the RTSP request message specifically comprises:
parsing the RTSP request message;
acquiring an Internet Protocol (IP) address or a user identifier whose type is different from that of the user identifier required for authentication comprised in the RTSP request message; and
acquiring a user identifier required for authentication corresponding to the IP address or the user identifier whose type is different from that of the user identifier required for authentication.

5. The method for processing a streaming media service according to any one of claims 1 to 4, wherein the adding the user identifier required for authentication to the RTSP request message specifically comprises:
extending a packet field of the RTSP request message, and carrying the user identifier required for authentication in an extended field.

6. The method for processing a streaming media service according to claim 4, wherein the receiving the RTSP request message sent by the RTSP client specifically comprises:
receiving the RTSP request message sent by the RTSP client through a Gateway GPRS Support Node (GGSN) or a Packet Data Serving Node (PDSN).

7. The method for processing a streaming media service according to claim 6, wherein the user identifier required for authentication comprises: a Mobile Station international Integrated Services Digital Network number (MSISDN), a Mobile Directory Number (MDN), an International Mobile Subscriber Identity (IMSI), an International Mobile Equipment Identity (IMEI), a Mobile subscriber Identification Number (MIN), an E-mail address, or a Session Initiation Protocol-Uniform Resource Identifier (SIP-URI).

8. A method for processing a streaming media service, comprising:
receiving a Real Time Streaming Protocol (RTSP) request message comprising a user identifier required for authentication;
parsing the user identifier required for authentication from the RTSP request message; and
performing user authentication according to the user identifier required for authentication.

9. The method for processing a streaming media service according to claim 8, wherein the receiving the RTSP request message comprising the user identifier required for authentication specifically comprises:
receiving the RTSP request message comprising the user identifier required for authentication from an RTSP client or an RTSP proxy.

10. The method for processing a streaming media service according to claim 8 or 9, wherein the parsing the user identifier required for authentication from the RTSP request message specifically comprises:
parsing an extended user identifier field in the RTSP request message, and reading the user identifier required for authentication from the user identifier field.

11. The method for processing a streaming media service according to claim 10, wherein the user identifier required for authentication comprises: a Mobile Station international Integrated Services Digital Network number (MSISDN), a Mobile Directory Number (MDN), an International Mobile Subscriber Identity (IMSI), an International Mobile Equipment Identity (IMEI), a Mobile subscriber Identification Number (MIN), an E-mail address, or a Session Initiation Protocol-Uniform Resource Identifier (SIP-URI).

12. An apparatus for processing a streaming media service, comprising:
a processing module, configured to add a user identifier required for authentication to a Real Time Streaming Protocol (RTSP) request message; and
a sending module, configured to send the RTSP request message comprising the user identifier required for authentication to an RTSP server, so that the RTSP server performs user authentication according to the user identifier required for authentication.

13. The apparatus for processing a streaming media service according to claim 12, further comprising:
a first receiving module, configured to receive an RTSP request message sent by an RTSP client; and
an acquiring module, configured to acquire a user identifier required for authentication according to the RTSP request message received by the first receiving module.

14. The apparatus for processing a streaming media service according to claim 13, wherein the acquiring module comprises:
a parsing unit, configured to parse the RTSP request message received by the first receiving module;
a first acquiring unit, configured to acquire an Internet Protocol (IP) address or a user identifier whose type is different from that of the user identifier required for authentication comprised in the RTSP request message; and
a second acquiring unit, configured to acquire a user identifier required for authentication corresponding to the IP address or the user identifier whose type is different from that of the user identifier required for authentication.

15. An apparatus for processing a streaming media service, comprising:
a second receiving module, configured to receive a Real Time Streaming Protocol (RTSP) request message comprising a user identifier required for authentication;
a parsing module, configured to parse the user identifier required for authentication from the RTSP request message received by the second receiving module; and
an authentication module, configured to perform user authentication according to the user identifier required for authentication parsed by the parsing module.

16. A system for processing a streaming media service, comprising:
a Real Time Streaming Protocol (RTSP) server, configured to receive an RTSP request message comprising a user identifier required for authentication, parse the user identifier required for authentication from the RTSP request message, and perform user authentication according to the user identifier required for authentication; and
an RTSP proxy, configured to receive an RTSP request message sent by an RTSP client, acquire a user identifier required for authentication according to the RTSP request message, add the user identifier required for authentication to the RTSP request message, and send the RTSP request message comprising the user identifier required for authentication to the RTSP server, so that the RTSP server performs authentication according to the user identifier required for authentication.
